# EUROPEAN PATENT APPLICATION

(11) **EP 2 481 548 A1**
(43) Date of publication of application: **01.08.2012**
(21) Application number: 10818819.4
(22) Date of filing: 22.09.2010
(51) Int. Cl.: B29C 45/27

(54) **RESIN MOLDING METHOD AND RESIN MOLDING**

(30) Priority: 25.09.2009 JP 2009220408
(71) Applicant: Tokai Rubber Industries, Ltd., Komaki-shi, Aichi 485-8550 (JP)
(72) Inventor: SUZUKI, Junichiro, Komaki-shi Aichi 485-8550 (JP)
(74) Representative: Müller-Boré & Partner Patentanwälte
(86) International application number: PCT/JP2010/066432
(87) International publication number: WO 2011/037146

(57) **Abstract**

An object is to provide a resin molding method and a resin molding capable of improving strength while preventing generation of a weld line. The resin molding method includes clamping a mold 1 to form a resin flow path 90 comprising an extended portion 26, a restricted portion 24, a linear gate 25, and a cavity 292, the extended portion 26 being disposed downstream of a nozzle of a molding machine to extend a flow path cross-sectional area, the restricted portion 24 being disposed downstream of the extended portion 26 to restrict the flow path cross-sectional area, the gate 25 being disposed downstream of the restricted portion 24, the cavity 292 being disposed downstream of the gate 25 and being provided with an extending portion 292a in an intersecting direction that extends in the direction intersecting a connecting direction of the restricted portion 24 and the gate 25; injecting a molten resin 91 into the resin flow path 90 to pour the molten resin 91 while splitting the molten resin 90 from the gate 25 to the extending portion 292a in the intersecting direction; and opening the mold 1 to remove a resin molding 70 formed of the solidified molten resin 91.

## Description

### [Technical Field]

The present invention relates to a resin molding method and a resin molding, in which a molten resin including a filler is used as a raw material.

### [Background Technology]

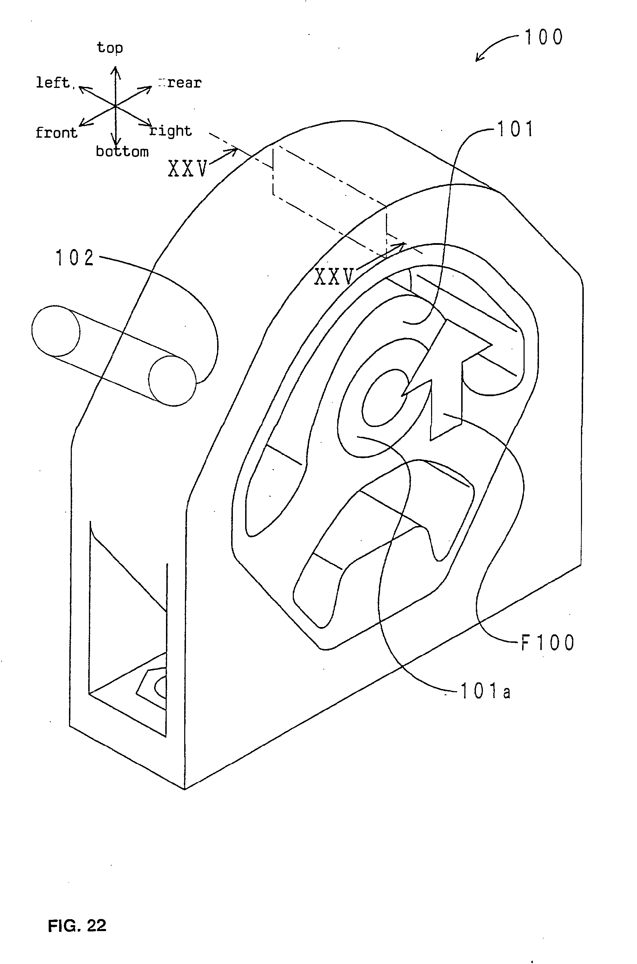

Fig. 22 is a perspective view of a conventional engine mount. An engine mount 100 is a resin injection molding. To produce the engine mount 100, an elastic member 101 is first placed in a cavity, and then a molten resin including fiber is injected from a one-point gate 102 (indicated by a thin line in Fig. 22) into the cavity.

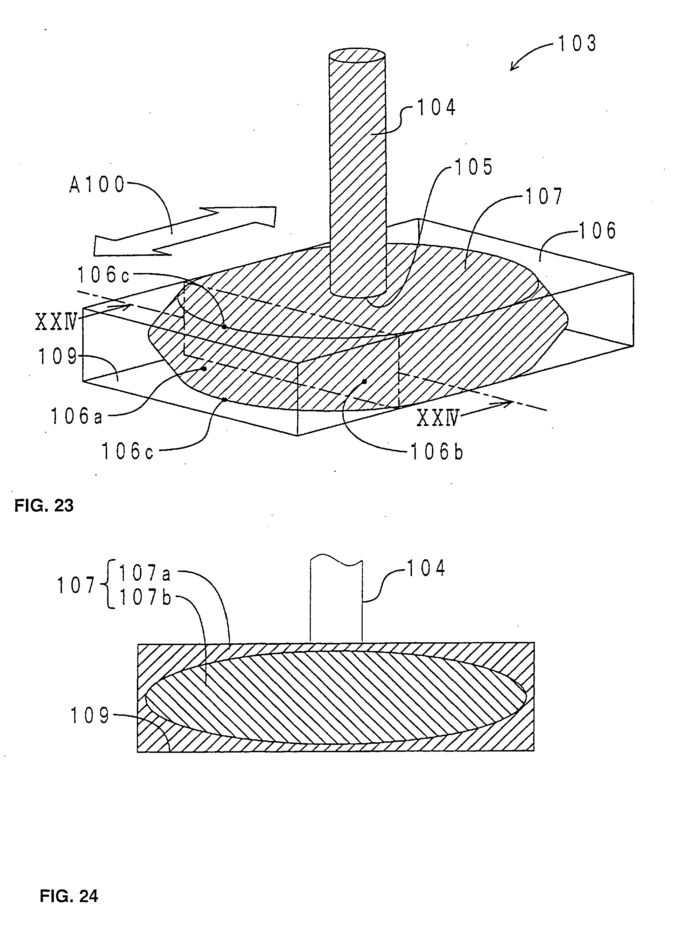

With the use of the one-point gate 102, however, it is difficult to form an oriented portion having a high fiber orientation in the engine mount 100. Fig. 23 is a schematic perspective view of a resin flow path with a one-point gate. Fig. 24 is a schematic view of a fracture cross section in direction XXIV - XXIV in Fig. 23.

As shown in Fig. 23, a resin flow path 103 has a runner 104, a one-point gate 105, and a cavity 106. A molten resin 107 flows into the cavity 106 in a circular shape centering the one-point gate 105. Thus, a flow velocity distribution varies in an extending direction (flow path direction) A100 of the cavity 106. Specifically, the flow velocity is high in a central portion 106a in a cross section and is low in two longitudinal end portions 106b in the cross section and two lateral end portions 106c in the cross section.

As shown in Fig. 24, an oriented portion 107a having a high fiber orientation and a non-oriented portion 107b having a low orientation in the molten resin 107 are thus observed in a fracture cross section substantially orthogonal to the flow path direction. The non-oriented portion 107b is disposed in the central portion where the flow velocity of the molten resin 107 is high. The non-oriented portion 107b has an elliptical shape. The oriented portion 107a is disposed around the non-oriented portion 107b.

The oriented portion 107a is formed since a shear force is exerted between a mold surface 109 of a mold and the molten resin 107. In the case where the difference in flow velocity is extremely large, however, between the central portion 106a in the cross section and the two longitudinal end portions 106b and two lateral end portions 106c in the cross section, as shown in Fig. 23, the oriented portion 107a is difficult to be formed in the vicinity of the mold surface 109. Consequently, a resin molding has a small proportion of the oriented portion 107a, thus reducing the strength of the resin molding.

### [Related Art]

### [Patent Literatures]

Patent Literature 1: Japanese Patent Laid-Open Publication No. H8-142218
Patent Literature 2: Japanese Patent Laid-Open Publication No. 2003-231156
Patent Literature 3: Japanese Patent Laid-Open Publication No. H10-34762

### [Summary of the Invention]

### [Shortcomings Resolved by the Invention]

To increase strength of a resin molding in a specific direction, a weld line may be formed in the resin molding. For instance, Patent Literature 1 discloses a resin molding method in which a weld line is intentionally generated. According to the resin molding method disclosed in the patent literature, an obstructing member is disposed in a resin flow path. Thus, a flow of a molten resin impinges on the obstructing member and then splits in the resin flow path. The ends of the split flows rejoin to form a weld line. Fiber in the molten resin is oriented along an extending line of the weld line. Thus, the resin molding method disclosed in the patent literature improves the strength (tensile strength or bending strength) in the extending direction of the weld line. Similar to Patent Literature 1, Patent Literatures 2 and 3 each also disclose a resin molding method in which a weld line is generated so as to orient fiber in a molten resin.

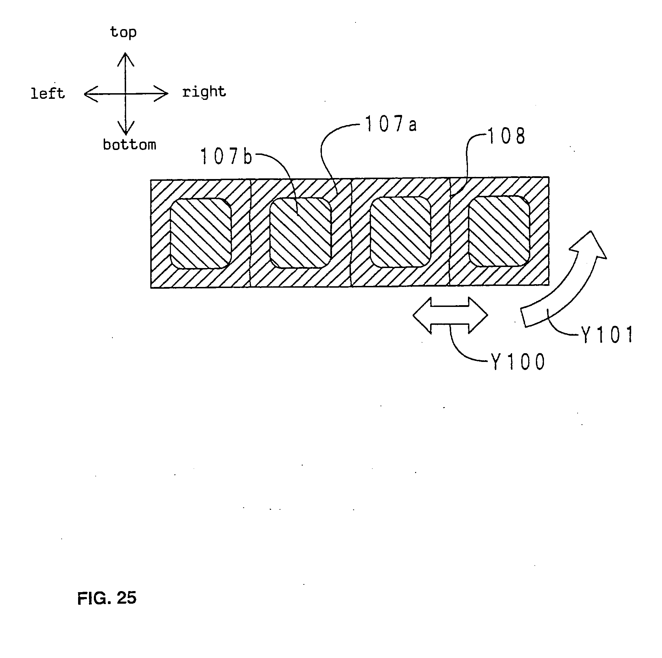

Fig. 25 is a schematic view of a fracture cross section substantially orthogonal to a flow path direction in a case where a weld line is hypothetically formed in an engine mount. The sections corresponding to those in Fig. 24 are indicated with the same reference numerals. Fig. 25 illustrates a fracture cross section in direction XXV - XXV in Fig. 22.

As shown in Fig. 25, forming a weld line 108 in a fracture cross section provides an oriented portion 107a around the weld line 108. Thus, the proportion of the oriented portion 107a is increased.

Providing the weld line 108 in a resin molding increases the strength in the extending direction of the weld line 108, but decreases the strength in the direction substantially orthogonal to the extending direction of the weld line 108. Specifically, fiber is oriented along the weld line 108, thus decreasing the strength in the direction substantially orthogonal to the extending direction of the weld line 108.

The engine mount 100 shown in Fig. 22 normally moves vertically relative to a mating member inserted through a cylindrical portion 101a while maintaining a substantially horizontal state. In this case, a load F100 is exerted on an internal peripheral surface of the cylindrical portion 101a substantially equally along the axial direction (left and right direction).

In a rare case, however, the engine mount 100 may move vertically relative to the mating member inserted through the cylindrical portion 101 a in an inclined state, not in the substantially horizontal state. In this case, the load is not exerted substantially equally along the axial direction of the cylindrical portion 101a.

As shown with an arrow Y101 in Fig. 25, a stress is exerted to force an end portion upward in this case. As indicated with an arrow Y100, the stress is thus exerted in the direction substantially orthogonal to the extending direction of the weld line 108 (i.e., weak strength direction).

Thus, forming the weld line 108 in the engine mount 100 increases the strength in the extending direction of the weld line108, and conversely, decreases the strength in the direction substantially orthogonal to the extending direction of the weld line 108. Furthermore, the stress stemming from the load F 100 may be exerted in the direction substantially orthogonal to the extending direction of the weld line 108.

In view of the circumstances above, the present invention provides a resin molding method and a resin molding capable of preventing generation of a weld line and improving strength.

### [Means for Resolving the Shortcomings]

(1) To address the circumstances above, a resin molding method according to the present invention includes clamping a mold to form a resin flow path comprising an extended portion, a restricted portion, a linear gate, and a cavity, the extended portion being disposed downstream of a nozzle of a molding machine to extend a flow path cross-sectional area, the restricted portion being disposed downstream of the extended portion to restrict the flow path cross-sectional area, the gate being disposed downstream of the restricted portion, the cavity being disposed downstream of the gate and being provided with an extending portion in an intersecting direction that extends in the direction intersecting a connecting direction of the restricted portion and the gate; injecting a molten resin from the nozzle into the resin flow path to pour the molten resin while splitting the molten resin from the gate to the extending portion in the intersecting direction, the molten resin including a base material and an anisotropic solid filler dispersed in the base material; and opening the mold to remove a resin molding formed of the solidified molten resin.

The resin molding method of the present invention includes clamping the mold, injection, and opening the mold. In the clamping of the mold, the resin flow path is formed, in which the extended portion, the restricted portion, the gate, and the cavity are disposed from upstream to downstream.

In the injection, the molten resin is injected into the resin flow path. The flow of the molten resin is extended as it passes through the extended portion. The flow of the molten resin, which was once extended, is restricted as it passes through the restricted portion. The restricted flow of the molten resin passes through the gate, which has a slit shape. The flow of the molten resin is thus formed into a band shape as it passes through the gate. The connecting direction of the restricted portion and the gate and the extending direction of the extending portion in the intersecting direction of the cavity intersect. Thus, the molten resin having passed through the gate impinges on a mold surface (including a surface of an insert member) demarcating the extending portion in the intersecting direction, and then flows into the cavity. In the opening of the mold, the resin molding is removed from the mold.

According to the resin molding method of the present invention, the molten resin passes through the extended portion and the restricted portion, thereby preventing variation in flow velocity distribution of the molten resin in the flow path direction. Namely, the flow velocity distribution is prevented from varying by extending and then restricting the flow of the molten resin.

The gate has a linear shape, not a pin-point or spot shape. In this regard, the flow velocity distribution of the molten resin is also prevented from varying in the flow path direction. The "linear shape" herein includes a straight line, a curve, and a combination thereof. A gate width (line width) may be constant or not throughout the gate length (entire line length).

Since the flow velocity distribution is prevented from varying, the oriented portion (section having a high orientation of the filler) is easily formed along the surface of the mold. The proportion of the oriented portion is thus increased in the resin molding. Accordingly, the strength (tensile strength or bending strength) of the resin molding can be increased. Furthermore, no obstructing member is intentionally disposed in the resin flow path in the resin molding method of the present invention, thus preventing generation of a weld line in the resin molding.

(2) The gate preferably has a slit shape in the configuration of (1) above. In the configuration, the gate has a slit shape, not a pin-point or spot shape. In other words, the gate has a linear shape. Furthermore, the gate width is constant throughout the gate length. Thus, the flow velocity distribution of the molten resin can be prevented from varying in the flow path direction.

(3) A short side of a flow path cross section in the extending portion in the intersecting direction preferably has a length of 4 mm or greater in the configuration (1) or (2) above. The resin molding method of the present invention is suitable for producing a thick and fiber-reinforced resin molding, as in the configuration.

(4) A long side of the gate and a long side of the flow path cross section in the extending portion in the intersecting direction are preferably substantially parallel in the substantially same length in one of the configurations (1) to (3) above. In the configuration, the flow velocity distribution of the molten resin can be prevented from varying, compared with the case in which the long side of the gate is shorter than the long side of the flow path cross section. In the case of the gate having a non-slit shape, namely, a non-linear shape, the long side of the gate is a line connecting two longitudinal ends of the gate.

(5) The connecting direction of the restricted portion and the gate and the extending direction of the extending portion in the intersecting direction are preferably substantially orthogonal in one of the configurations (1) to (4) above.

In the configuration, the molten resin having passed through the gate flows into the extending portion in the intersecting direction from the substantially perpendicular direction. Thus, the flow of the molten resin can easily be split into two. In addition, the flow rate can be prevented from being disproportionate between the split flows.

(6) The extending direction of the flow path cross-sectional area in the extended portion and the restricting direction of the flow path cross-sectional area in the restricted portion are preferably substantially orthogonal in one of the configurations (1) to (5) above. In the configuration, the flow velocity distribution can be prevented from varying in the two directions substantially orthogonal to each other (extending direction and restricting direction).

(7) To address the circumstances above, a resin molding according to the present invention has a fracture cross section provided with an oriented portion that has a high orientation of a filler and a non-oriented portion that has a lower orientation of the filler than in the oriented portion. A fracture direction of the fracture cross section intersects with an extending direction of a front surface on a gate side having a linear gate cut mark. The oriented portion is disposed in a frame shape along a shape of an external edge of the fracture cross section. The non-oriented portion is disposed inside the oriented portion.

The resin molding of the present invention is provided with the oriented portion in a frame shape along the shape of the external edge of the fracture cross section. Thus, the thickness in the oriented portion in the fracture cross section is unlikely to vary, thus improving the strength of the resin molding. Furthermore, the strength distribution of the resin molding can be prevented from varying.

The gate cut mark has a linear shape, not a pin-point or spot shape. In this regard, the flow velocity distribution of the molten resin can be prevented from varying in the flow path direction. The "linear shape" herein includes a straight line, a curve, and a combination thereof. A gate width (line width) may be constant or not throughout the length of the gate cut mark (entire line length).

(8) The gate cut mark preferably has a slit shape in the configuration (7) above. In the configuration, the gate cut mark has a linear shape. Furthermore, the width of the gate cut mark is constant throughout the length of the gate cut mark. In the configuration, the oriented portion is provided in a frame shape along the shape of the external edge of the fracture cross section. Thus, the thickness in the oriented portion in the fracture cross section is unlikely to vary, thereby improving the strength of the resin molding. Furthermore, the strength distribution of the resin molding can be prevented from varying.

(9) The oriented portion preferably includes an oriented portion on the gate side and an oriented portion on an opposite side to the gate having the non-oriented portion in between, the oriented portion on the gate side being proximate to the front surface on the gate side, the oriented portion on the opposite side to the gate being proximate to the front surface on the opposite side to the gate opposite to the front surface on the gate side. The oriented portion on the opposite side to the gate is preferably thicker than the oriented portion on the gate side. In the configuration, the resin molding can be reinforced against the load input to the resin molding from the front surface on the opposite side to the gate, in particular.

### [Effect of the Invention]

The present invention provides a resin molding method and a resin molding capable of preventing generation of a weld line and improving strength.

### [Brief Description of the Drawings]

[Fig. 1] A perspective view in a state where a mold is opened, the mold being used in a resin molding method according to a first embodiment.
[Fig. 2] A perspective view in a state where a movable platen of the mold is clamped.
[Fig. 3] A right surface view in the state where the movable platen of the mold is clamped.
[Fig. 4] A perspective view of slide cores for a restricting member.
[Fig. 5] A schematic perspective view of the first stage of an injection process in the resin molding method.
[Fig. 6] A schematic perspective view of the second stage of the injection process.
[Fig. 7] A schematic perspective view of the third stage of the injection process.
[Fig. 8] A perspective view of an engine mount according to the embodiment.
[Fig. 9] A schematic view of a fracture cross section in direction IX - IX in Fig. 8.
[Fig. 10] A schematic perspective view of a resin flow path in a resin molding method according to a second embodiment.
[Figs. 11(a) to 11(c)] A perspective view of a fiber filler; a perspective view of a thin plate filler; and a perspective view of an oval sphere filler, respectively.
[Fig. 12] A front view of a wavy gate.
[Fig. 13] A front view of a zigzag gate.
[Fig. 14] A front view of a linear gate having circular portions on two longitudinal ends.
[Fig. 15] A front view of a linear gate having a total of eight circular portions on two longitudinal ends and therebetween.
[Fig. 16] A front view of a paddle-shaped gate having a gate width narrowing from two longitudinal ends toward the longitudinal center.
[Fig. 17] A perspective view of an engine mount molded using a wavy gate.
[Fig. 18] A photo of a fracture cross section of a sample of Embodiment 1.
[Fig. 19] A drawing of the photo of Fig. 18.
[Fig. 20] A photo of a fracture cross section of a sample of Comparative Example 1.
[Fig. 21] A drawing of the photo of Fig. 20.
[Fig. 22] A perspective view of a conventional engine mount.
[Fig. 23] A schematic perspective view of a resin flow path having a one-point gate.
[Fig. 24] A schematic view of a fracture cross section in direction XXIV - XXIV in Fig. 23.
[Fig. 25] A schematic view of a fracture cross section in a direction substantially orthogonal to a flow path direction in a case where a weld line is hypothetically formed in an engine mount.

### [Embodiments of the Invention]

A resin molding method and a resin molding according to embodiments of the present invention are explained below.

### (First Embodiment)

### [Mold Used in Resin Molding Method]

A mold used in the resin molding method according to the embodiment is first explained below.

### (Configuration of Mold)

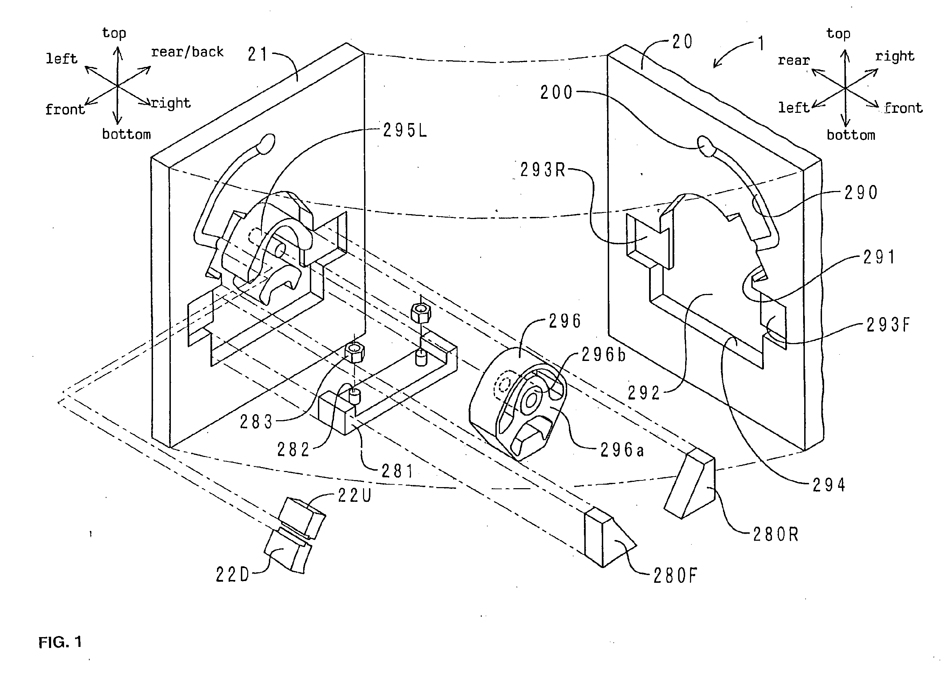

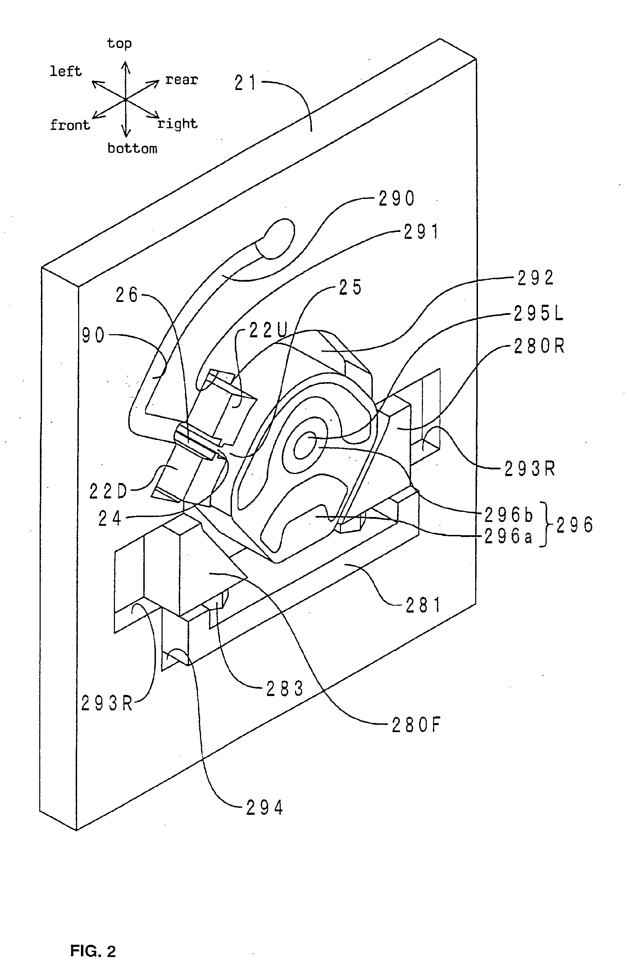

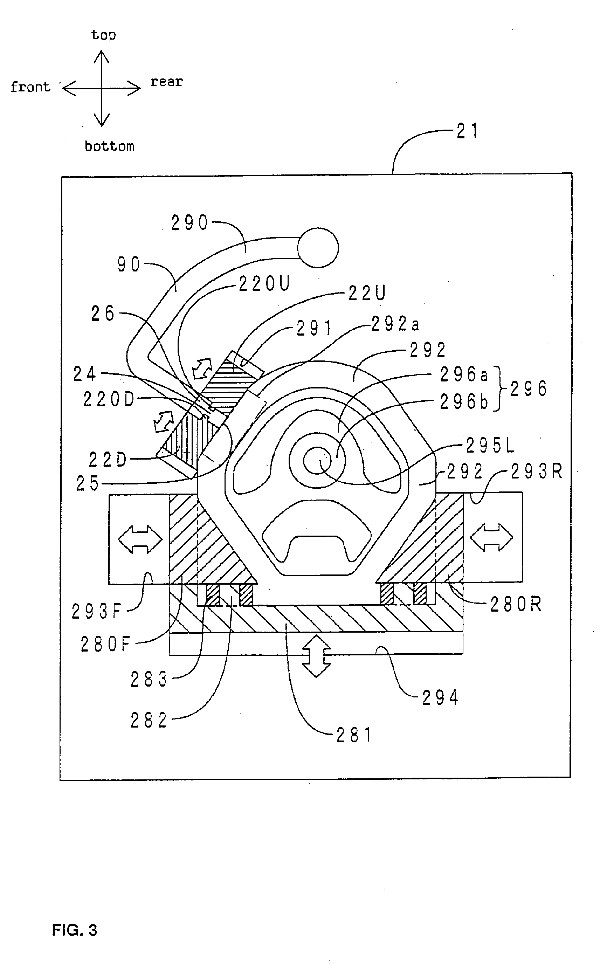

The configuration of the mold is first explained. Fig. 1 is a perspective view in a state where the mold is opened, the mold being used in the resin molding method according to the present embodiment. With respect to a fixed platen 20, only a vicinity of a left surface thereof is illustrated. Fig. 2 is a perspective view in a state where a movable platen of the mold is clamped. Fig. 3 is a right surface view in the state where the movable platen of the mold is clamped.

As shown in Figs. 1 to 3, the mold 1 includes the fixed platen 20, the movable platen 21, slide cores 22U and 22D for a restricting member, slide cores 280F and 280R for a concave portion, a slide core 281 for fixing nuts.

The fixed platen 20 is composed of a chrome molybdenum steel and has a cuboid block shape. The movable platen 21 is composed of a chrome molybdenum steel and has a rectangular plate shape. The left surface of the fixed platen 20 and the right surface of the movable platen 21 come in contact with each other, and thereby a runner 290, a concave portion 291 for slide cores, a cavity 292, a front concave portion 293F, a rear concave portion 293R, and a lower concave portion 294 are formed between the fixed platen 20 and the movable platen 21.

A sprue 200 extending in a left and right direction is provided in the fixed platen 20. The left end of the sprue 200 is open on the left surface of the fixed platen 20. The runner 290 connects the left end of the sprue 200 and the substantially longitudinal center of the concave portion 291 for slide cores.

The cavity 292 is disposed at substantially the center of the left surface of the fixed platen 20 and the right surface of the movable platen 21. A projection 295L projects from the right surface of the movable platen 21. The projection 295L is disposed inside the cavity 292. In a clamped state, the front end of the projection 295L is in contact with the left surface of the fixed platen 20. The projection 295L is mounted with an elastic member 296. In other words, the elastic member 296 is disposed inside the cavity 292. Specifically, the elastic member 296 is integrally provided with a rubber main body 296a and a metal cylindrical portion 296b.

The front concave portion 293F is connected in the front of the cavity 292. The rear concave portion 293R is connected in the rear of the cavity 292. The slide core 280F for the concave portion is housed in the front concave portion 293F so as to be able to move in an anteroposterior direction. The slide core 280R for the concave portion is housed in the rear concave portion 293R so as to be able to move in the anteroposterior direction.

The lower concave portion 294 is connected below the cavity 292. The slide core 281 for fixing the nuts is housed in the lower concave portion 294 so as to be able to move vertically. A pair of projections 282 are provided on the upper surface of the slide core 281 for fixing the nuts. The nuts 283 are mounted around the projections 282.

The concave portion 291 for the slide cores is disposed upper front of the cavity 292. The slide cores 22U and 22D for the restricting member are housed in the concave portion 291 for the slide cores so as to be able to move in a lower front and upper rear direction.

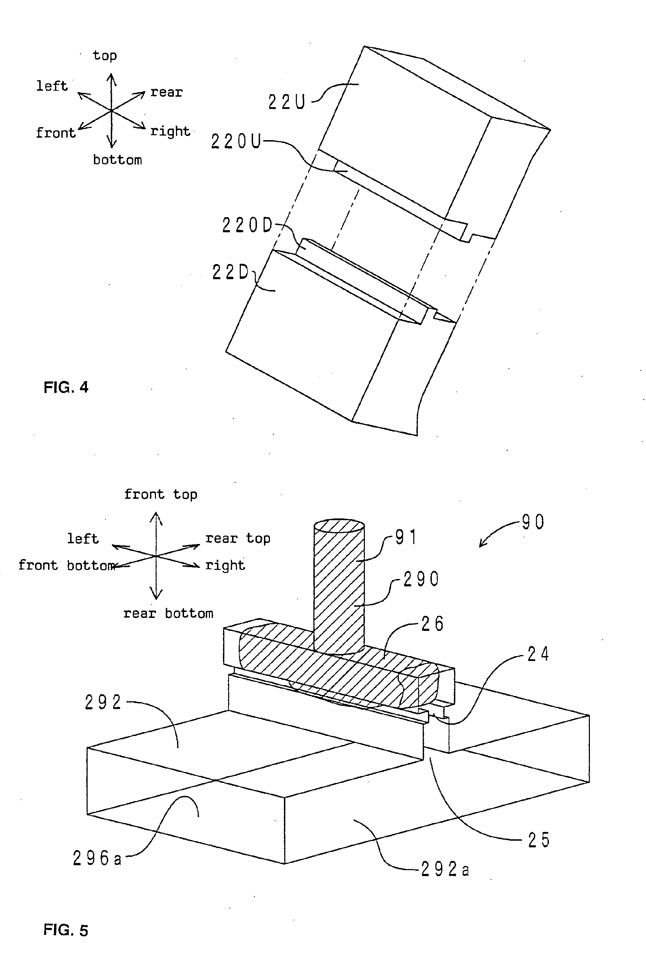

Fig. 4 is a perspective view of the slide cores for the restricting member. The slide core 22U for the restricting member is composed of a chrome molybdenum steel and has a cuboid block shape. The restricting member 220U is provided on the lower surface of the slide core 22U for the restricting member. The restricting member 220U extends in the left and right direction. A cross section of the restricting member 220U has a rectangular shape.

The material and configuration of the slide core 22D for the restricting member are similar to those of the slide core 22U for the restricting member. The slide core 22D for the restricting member is movably housed in the concave portion 291 for the slide cores in a position opposite to the slide core 22U for the restricting member. Specifically, the restricting member 220U and the restricting member 220D are opposed to each other.

### (Movement of Mold)

The movement of the mold 1 is explained below. The mold 1 is switchable between a mold opened state and a mold clamped state.

In the mold opened state, the movable platen 21 is positioned distant on the left with reference to the fixed platen 20, as shown in Fig. 1. In the concave portion 291 for the slide cores on the fixed platen 20 side, the slide core 22U for the restricting member and the slide core 22D for the restricting member are distant in an upper rear position and a lower front position, respectively (refer to Fig. 3). In the front concave portion 293F on the fixed platen 20 side, the slide core 280F for the concave portion stands by in the front portion of the front concave portion 293F. In the rear concave portion 293R on the fixed platen 20 side, the slide core 280R for the concave portion stands by in the rear portion of the rear concave portion 293R. In the lower concave portion 294 on the fixed platen 20 side, the slide core 281 for fixing the nuts stands by in the lower portion of the lower concave portion 294.

To switch from the mold opened state to the mold clamped state, the right surface of the movable platen 21 is contacted with the left surface of the fixed platen 20. Contacting the movable platen 21 with the fixed platen 20 forms the runner 290, the concave portion 291 for the slide cores, the cavity 292, the front concave portion 293F, the rear concave portion 293R, and the lower concave portion 294 between the fixed platen 20 and the movable platen 21.

In parallel with the contact of the movable platen 21 and the fixed platen 20, the slide core 22U for the restricting member and the slide core 22D for the restricting member are contacted with each other in the substantially longitudinal center of the concave portion 291 for the slide cores, as shown in Fig. 3. In the front concave portion 293F, the slide core 280F for the concave portion is moved to the rear portion of the front concave portion 293F. The rear portion of the slide core 280F for the concave portion then proceeds into the cavity 292. In the rear concave portion 293R, the slide core 280R for the concave portion is moved to the front portion of the rear concave portion 293R. The front portion of the slide core 280R for the concave portion then proceeds into the cavity 292. In the lower concave portion 294, the slide core 281 for fixing the nuts is moved to the upper portion of the lower concave portion 294. The upper portion of the slide core 281 for fixing the nuts then proceeds into the cavity 292. Thereby, the mold 1 is switched from the mold opened state to the mold clamped state. To switch from the mold clamped state to the mold opened state, the series of above processes is performed in a reverse manner.

### [Resin Flow Path]

A resin flow path formed in the mold 1 is explained below. The resin flow path 90 is formed inside the mold 1 in the mold clamped state. The resin flow path 90 includes the sprue 200, the runner 290, an extended portion 26, a restricted portion 24, a gate 25, and the cavity 292.

The extended portion 26 is provided downstream of the runner 290. In the extended portion 26, a flow path cross-sectional area (cross-sectional area substantially perpendicular to a flow direction of a molten resin from upper front to lower rear) of the resin flow path 90 suddenly increases. The flow path cross-sectional area in the extended portion 26 extends in the left and right direction. The flow path cross section in the extended portion 26 has dimensions of 50 mm (left and right long side) by 6 mm (lower front and upper rear short side).

As shown in Fig. 3, the restricted portion 24 is disposed downstream of the extended portion 26. The restricted portion 24 is provided between the restricting member 220D of the slide core 22D for the restricting member and the restricting member 220U of the slide core 22U for the restricting member. The restricted portion 24 extends in the left and right direction. The flow path cross-sectional area in the restricted portion 24 suddenly decreases relative to the flow path cross-sectional area in the extended portion 26. The flow path cross-sectional area in the restricted portion 24 is restricted in the lower front and upper rear direction. The flow path cross section of the restricted portion 24 has dimensions of 50 mm (left and right long side) by 2 mm (lower front and upper rear short side).

The gate 25 is disposed downstream of the restricted portion 24. The gate 25 has a slit shape. Specifically, the gate 25 has a rectangular shape having a long side extending in the left and right direction and a short side extending in the lower front and upper rear direction. The gate 25 has dimensions of 50 mm (left and right long side) by 4 mm (lower front and upper rear short side).

The cavity 292 is disposed downstream of the gate 25. As shown with a dashed-dotted frame in Fig. 3, the gate 25 is open to an extending portion 292a in an intersecting direction of the cavity 292. The extending portion 292a in the intersecting direction extends in the lower front and upper rear direction. In contrast, the restricted portion 24 and the gate 25 extend in the upper front and lower rear direction. Thus, the extending direction of the extending portion 292a in the intersecting direction and the connecting direction of the restricted portion 24 and the gate 25 are substantially orthogonal.

The flow path cross section (cross section substantially perpendicular to the flow direction of the molten resin from lower front to upper rear or from upper rear to lower front) in the extending portion 292a in the intersecting direction has a rectangular shape. The long side of the flow path cross section extends in the left and right direction. The short side of the flow path cross section extends in the upper front and lower rear direction. Thus, the long side of the gate 25 and the long side of the flow path cross section are substantially parallel in the substantially same length.

As described above, the resin flow path 90 is formed inside the mold 1 in the mold clamped state, the resin flow path 90 being connectedly provided from upstream to downstream with the sprue 200, the runner 290, the extended portion 26, the restricted portion 24, the gate 25, and the cavity 292. The flow path direction of the resin flow path 90 in the cavity 292 is the extending direction of the cavity 292, namely, a circumferential direction centering the elastic member 296.

### [Resin Molding Method]

The resin molding method according to the present embodiment is explained below. The resin molding method according to the present embodiment includes a mold clamping process, an injection process, and a mold opening process.

### (Mold Clamping Process)

The mold clamping process is first explained. In the mold clamping process, the mold 1 is switched from the mold opened state shown in Fig. 1 to the mold clamped state shown in Figs. 2 and 3.

Specifically, the elastic member 296 is mounted on the projection 295L. Then, the movable platen 21 is contacted with the fixed platen 20 from the left. Subsequently, the slide cores 22U and 22D each for the restricting member are contacted in the concave portion 291 for the slide cores. In the front concave portion 293F, the slide core 280F for the concave portion is moved rearward. In the rear concave portion 293R, the slide core 280R for the concave portion is moved forward. In the lower concave portion 294, the slide core 281 for fixing the nuts, to which the nuts 283 are already mounted, is moved upward.

### (Injection Process)

Subsequently, the injection process is explained below. In the injection process, a molten resin is injected from a nozzle of a molding machine to the resin flow path 90. The molten resin includes nylon 66 and glass fiber. The nylon 66 is included in a base material of the present invention. The glass fiber is included in a filler of the present invention. The glass fiber is dispersed in molten nylon 66. The cylinder temperature of the molding machine is approximately 290 °C. The temperature of the mold 1 is approximately 80 °C.

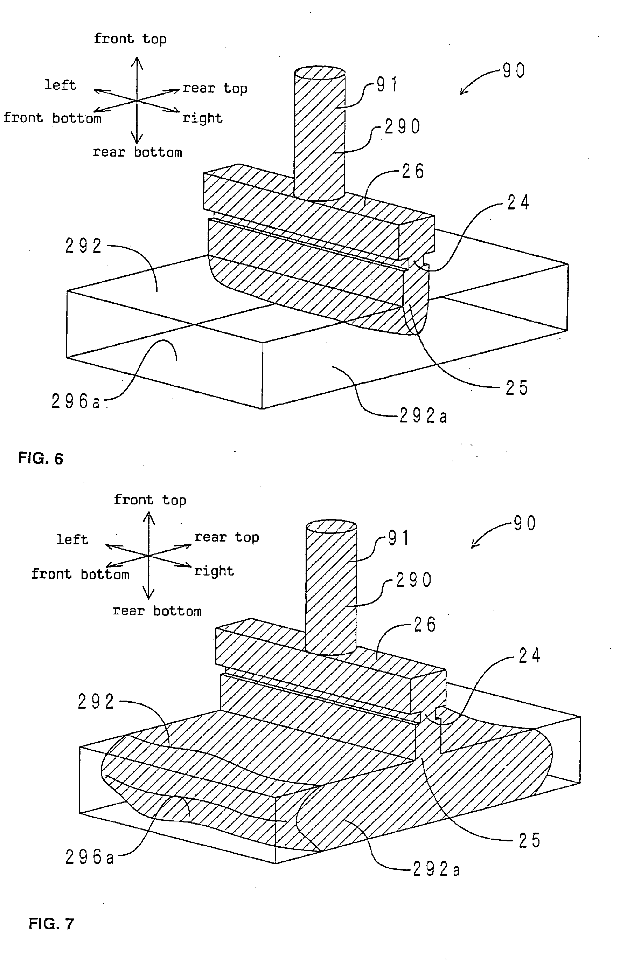

Fig. 5 is a schematic perspective view of the first stage of the injection process in the resin molding method according to the present embodiment. Fig. 6 is a schematic perspective view of the second stage of the injection process. Fig. 7 is a schematic perspective view of the third stage of the injection process.

As shown in Fig. 5, the molten resin 91 flows inside the resin flow path 90. The flow path cross-sectional area of the resin flow path 90 extends in the left and right direction in the extended portion 26. Accordingly, the flow of the molten resin 91 extends in the left and right direction.

Of the flow of the molten resin 91, the substantially central portion in the left and right direction first reaches the restricted portion 24. Since the flow path cross-sectional area of the restricted section 24 is narrow, the flow resistance is high. Thus, while the substantially central portion in the left and right direction of the flow of the molten resin 91 passes through the restricted portion 24, the two end portions in the left and right direction of the flow of the molten resin 91 catches up with the substantially central portion in the left and right direction. Thereby, variation is corrected in the flow velocity distribution of the molten resin 91. As shown in Fig. 6, after passing through the restricted portion 24, the molten resin 91 passes through the slit-shaped gate 25.

As shown in Fig. 7, the molten resin 91 having passed through the gate 25 first hits the main body 296a of the elastic member 296, and then splits into two (lower front and upper rear). Subsequently, the molten resin 91 flows in the circumferential direction along an external peripheral surface of the main body 296a. Then, the molten resin 91 spreads across the cavity 292. The spread molten resin is cooled and solidified in the cavity 292.

### (Mold Opening Process)

Subsequently, the mold opening process is explained. In the mold opening process, the mold 1 is switched back from the mold clamped state shown in Figs. 2 and 3 to the mold opened state shown in Fig. 1.

Specifically, as shown in Fig. 3, the slide cores 22U and 22D each for the restricting member are separated in the concave portion 291 for the slide cores. In the front concave portion 293F, the slide core 280F for the concave portion is moved forward. In the rear concave portion 293R, the slide core 280R for the concave portion is moved rearward. In the lower concave portion 294, the slide core 281 for fixing the nuts is moved downward. Then, the movable platen 21 is separated from the fixed platen 20 to the left. Thereafter, the gate is cut and thus an engine mount is completed.

### [Resin Molding]

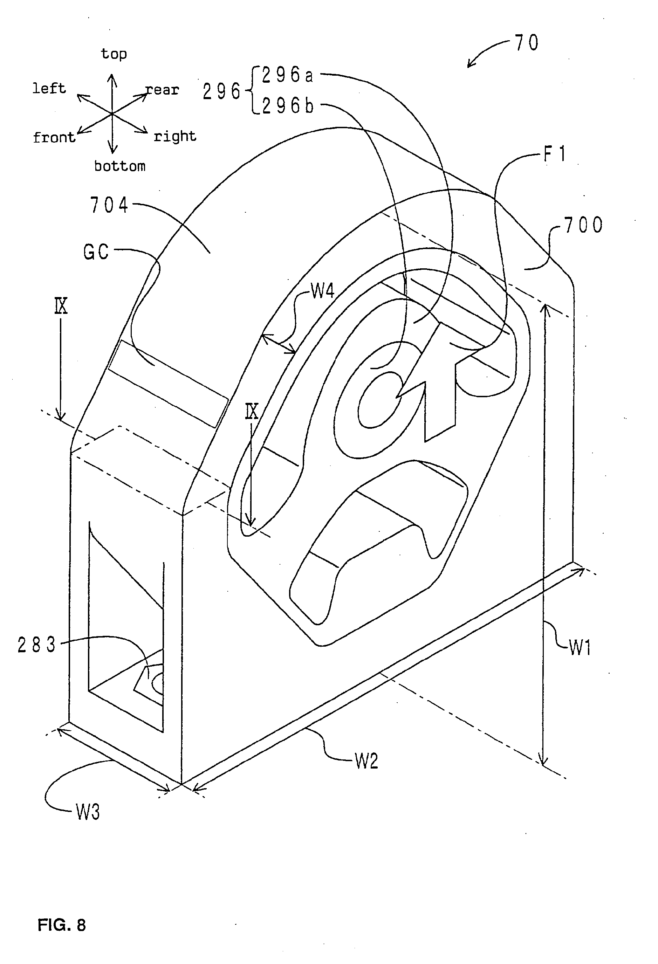

The resin molding according to the present embodiment is explained below. The resin molding according to the present embodiment is an engine mount. Fig. 8 is a perspective view of the engine mount according to the present embodiment. An engine mount 70 explained below is schematic and may not have a gate cut mark GC thereon depending on a process after opening the mold.

As shown in Fig. 8, the engine mount 70 according to the present embodiment is integrally provided with a bracket 700 and an elastic member 296. A vertical length W1 of the engine mount 70 is 110 mm. An anteroposterior length W2 of the engine mount 70 is 100 mm. A lateral length W3 of the engine mount 70 is 50 mm. The minimum value of a radial thickness W4 of the bracket 700 is 11 mm.

The engine mount 70 is used to fix a vehicle engine to a vehicle body. The engine mount 70 prevents engine vibration from propagating to the vehicle body. A rectangular gate cut mark GC is formed on a front surface (external peripheral surface) 704 on the gate side of the bracket 700.

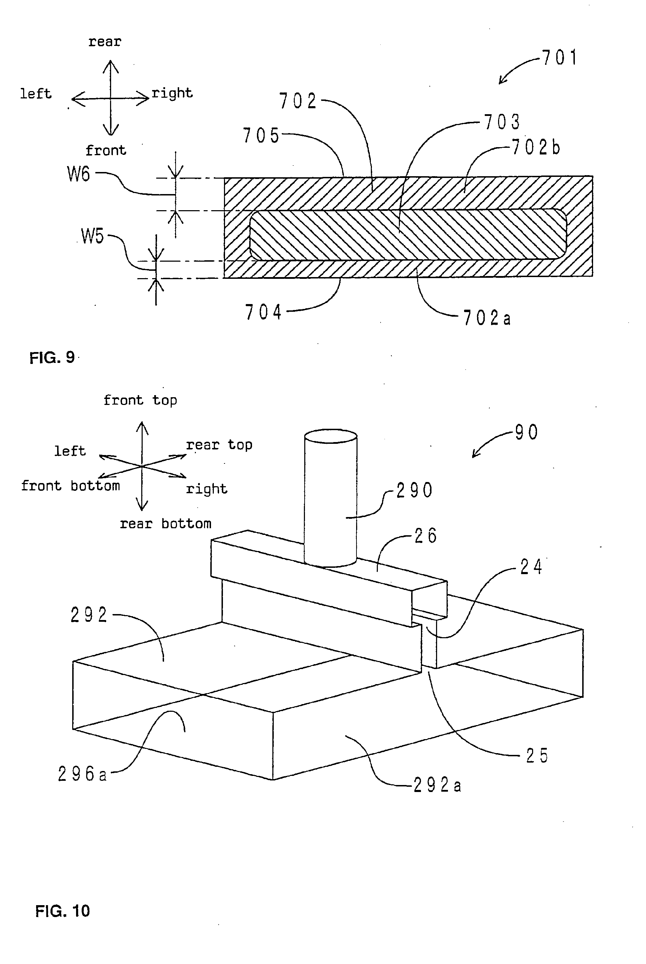

Fig. 9 is a schematic view of a fracture cross section in direction IX - IX in Fig. 8. As shown in Fig. 9, an oriented portion 702 and a non-oriented portion 703 are provided on a fracture cross section 701. The oriented portion 702 has a substantially rectangular shape. The oriented portion 702 is disposed in a frame shape along a shape of an external edge (rectangular shape) of the fracture cross section 701. The non-oriented portion 703 has a substantially rectangular shape. The non-oriented portion 703 is disposed inside the oriented portion 702.

A front edge of the fracture cross section 701 corresponds to the front surface 704 on the gate side. A rear edge of the fracture cross section 701 corresponds to a front surface 705 on an opposite side to the gate (internal peripheral surface). The front surface 705 on the opposite side to the gate is provided opposite to the front surface 704 on the gate side in the anteroposterior direction (radial direction). The front surface 705 on the opposite side to the gate is in contact with an external peripheral surface of the main body 296a.

An oriented portion 702a on the gate side is provided between the front surface 704 on the gate side and the non-oriented portion 703. An oriented portion 702b on an opposite side to the gate is provided between the front surface 705 on the opposite side to the gate and the non-oriented portion 703. A thickness W6 of the oriented portion 702b on the opposite side to the gate is greater than a thickness W5 of the oriented portion 702a on the gate side. In other words, the non-oriented portion 703 is disposed closer to the front surface 704 on the gate side offset than the center of the fracture cross section 701 toward. The thickness difference is observed throughout the periphery of the bracket 700. Specifically, the thickness of the oriented portion 702 is greater on the internal side than the external side in the radius direction.

The fracture cross section 701 can be observed by fracturing (not cutting) the bracket 700 in the radial direction in a tensile test, for example. The higher the glass fiber orientation is, the more the glass fiber is fluffed in the fracture cross section 701.

### [Functions and Effects]

Functions and Effects of the resin molding method and the engine mount 70 of the present embodiment are explained below. According to the resin molding method of the present embodiment, the molten resin 91 passes through the extended portion 26 and the restricted portion 24, as shown in Figs. 5 and 6, thereby preventing the flow velocity distribution of the molten resin 91 from varying in the flow path direction (from upper front to lower rear). Namely, spreading and then squeezing the flow of the molten resin 91 prevents variation in the flow velocity distribution.

Furthermore, the gate 25 has a slit shape, not a pin-point or spot shape. The shape also contributes to prevention of variation in the flow velocity distribution of the molten resin 91 in the flow path direction (from upper front to lower rear).

Preventing variation in the flow velocity distribution facilitates forming of the orientated section 702 shown in Fig. 9 along the mold surface of the mold 1 (including the front surface of the main body 296a). Thus, the proportion of the oriented portion 702 in the engine mount 70 is increased, and thereby the strength (tensile strength or bending strength) of the engine mount 70 is improved. In the resin molding method of the present embedment, no obstructing member is intentionally disposed in the resin flow path 90, thus preventing generation of a weld line in the engine mount 70.

As shown in Fig. 8, the minimum value of the radial thickness W4 of the bracket 700 is 11 mm according to the resin molding method of the present embodiment. In other words, the short side (side extending in the upper front and lower rear direction) of the flow path cross section in the extending portion 292a in the intersecting direction of the cavity 292 shown in Fig. 5 is 11 mm. Thus, the resin molding method of the present embodiment is suitable in production of a thick resin molding.

Furthermore, as shown in Fig. 5, the long side in the left and right direction of the gate 25 and the long side in the left and right direction of the flow path cross section in the extending portion 292a in the intersecting direction are substantially parallel in the substantially same length according to the resin molding method of the present embodiment. Thus, the flow velocity distribution of the molten resin 91 can be more prevented from varying than in the case in which the long side in the left and right direction of the gate 25 is shorter than the long side in the left and right direction of the flow path cross section.

As shown in Fig. 5, the extending direction (lower front and upper rear) of the extending portion 292a in the intersecting direction and the connecting direction (upper front and lower rear) of the restricted portion 24 and the gate 25 are substantially orthogonal according to the resin molding method of the present embodiment. The flow of the molten resin 91 can thus easily be split into two.

As shown in Fig. 5, the extending direction (left and right direction) of the flow path cross-sectional area in the extended portion 26 and the restricting direction (lower front and upper rear) of the flow path cross-sectional area in the restricted portion 24 are substantially orthogonal according to the resin molding method of the present embodiment. The flow velocity distribution can thus be prevented from varying in the two directions (extending direction and restricting direction) which are substantially orthogonal to each other.

In the engine mount 70 of the present embodiment, the oriented portion 702 is disposed in a rectangular frame shape along the shape of the external edge of the fracture cross surface 701, as shown in Fig. 9. Thus, the thickness of the oriented portion 702 is less likely to vary compared with a conventional fracture cross section shown in Fig. 24. Accordingly, the strength of the engine mount 70 is improved.

In the engine mount 70, a load F1 is exerted on the cylindrical portion 296b, as shown in Fig. 8. Thus, a stress is exerted on the bracket 700 from inside in the radial direction. According to the engine mount 70 of the present embodiment, the thickness W6 of the oriented portion 702b on the opposite side to the gate is provided greater than the thickness W5 of the oriented portion 702a on the gate side, as shown in Fig. 9. Thus, the strength can be improved relative to the stress exerted from inside in the radial direction.

### (Second Embodiment)

A resin molding method and an engine mount in the present embodiment are different from the resin molding method and the engine mount in the first embodiment only in a shape of a resin flow path. Only the differences are explained herein.

Fig. 10 is a schematic perspective view of a resin flow path in the resin molding method according to the present embodiment. Components corresponding to those in Fig. 5 are indicated with the same reference numerals. As shown in Fig. 10, the gate 25 is connected downstream of the restricted portion 24 without expansion of a flow path cross-sectional area (flow path width in the lower front and upper rear direction). In other words, the flow path cross-sectional area of the restricted portion 24 and the flow path cross-sectional area of the gate 25 are substantially identical.

The resin molding method and the engine mount of the present embodiment have similar functions and effects to the resin molding method and the engine mount of the first embodiment with respect to the components having the common structure. According to the resin molding method of the present embodiment, the short side (width in the lower front and upper rear direction) of the gate 25 is short. Thus, it is easy to cut the gate 25 from the molded engine mount.

### (Others)

The embodiments of the resin molding method and the resin molding according to the present invention are explained above. The present invention is not, however, limited in particular to the above embodiments. The present invention may be embodied in various modifications and improvements possibly performed by those skilled in the art.

The base material of the molten resin 91 is not limited to any specific type. Examples of the base material may include polyamides (nylon 6, nylon 66, nylon 46, nylon 610, nylon 612, aromatic nylon and others), a polyethylene, a polypropylene, a polystyrene, an acrylonitrile butadiene styrene resin, a polyacetal, a polycarbonate, a modified polyphenylene ether, a polybutylene terephthalate, a polyethylene terephthalate, a polyphenylene sulfide, and the like.

The filler of the molten resin 91 is not limited to any specific type, either. Examples of the filler may include a glass fiber, a carbon fiber, an aramid fiber, a boron fiber, an alumina fiber, a metal fiber, a silicon carbide fiber, a wollastonite, a whisker, a kaolinite, talc, a mica, a montmorillonite, a clay, a carbon nanotube, and the like.

The filler is not limited to any specific shape. A fiber filler 800 may be used, as shown in 11(a). Alternatively, a thin plate filler 801 may be used, as shown in 11(b). Further alternatively, an oval spherical filler 802 may be used, as shown in 11(c). Namely, the filler only has to have an anisotropic shape. Furthermore, the mold 1 is not limited to any specific material, and the gate 25 in the mold 1 is not limited to any specific position, either.

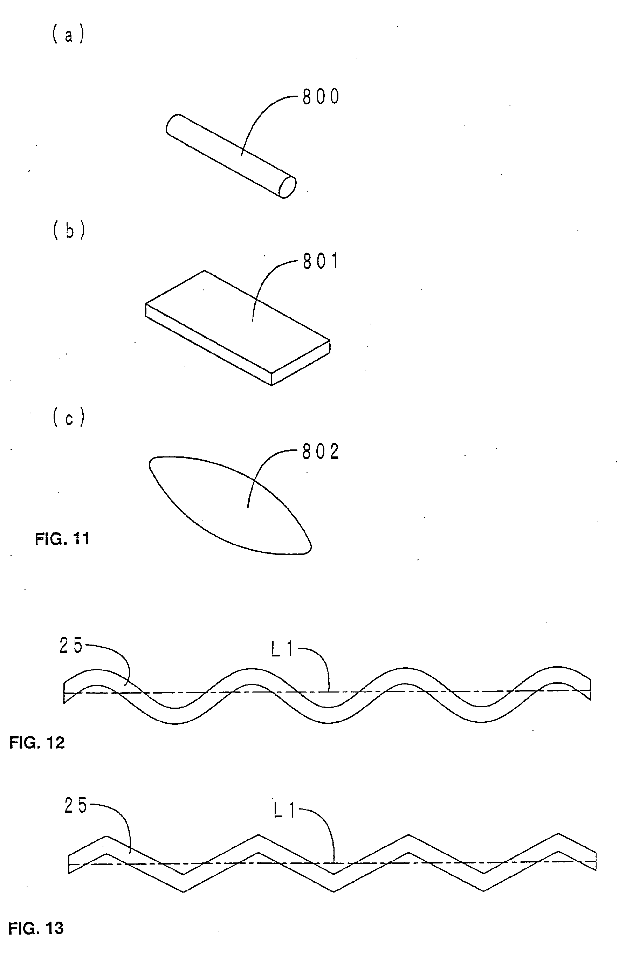

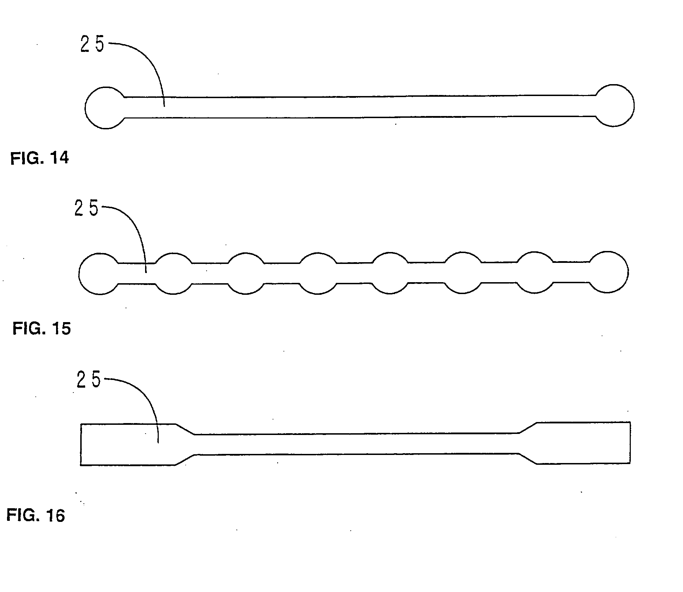

The gate 25 may have a shape other than a slit shape. As shown in Fig. 12, a gate 25 having a wavy line (sine curve) shape may be disposed. A long side L1 of the gate 25 in Fig. 12 is a line connecting two longitudinal ends. As shown in Fig. 13, a gate 25 having a zigzag shape may be disposed. A long side L1 of the gate 25 in Fig. 13 is a line connecting two longitudinal ends. As shown in Fig. 14, a gate 25 having a linear shape provided with circular portions on two longitudinal ends may be disposed. As shown in Fig. 15, a gate 25 having a linear shape provided with a total of eight circular portions on two longitudinal ends and therebetween may be disposed. As shown in Fig. 16, a gate 25 having a paddle shape with a gate width narrowing from two longitudinal ends toward the longitudinal center may be disposed. In other words, the gate 25 may have an uneven width throughout the length of the gate 25, as shown in Figs. 14 to 16.

In the case where the gate 25 is not linear, as shown with the gate 25 in Fig. 12 or 13 in particular, the strength in a vibration direction (direction orthogonal to the long side L1) of the gate 25 can be improved in the vicinity of a gate cut mark of a resin molding.

In the case where the gate 25 does not have a portion linearly connected throughout the length of the long side L1 in the gate 25, as shown with the gate 25 in Fig. 12 or 13, the strength in the vibration direction (direction orthogonal to the long side L1) of the gate 25 can be improved in the vicinity of a gate cut mark of a resin molding.

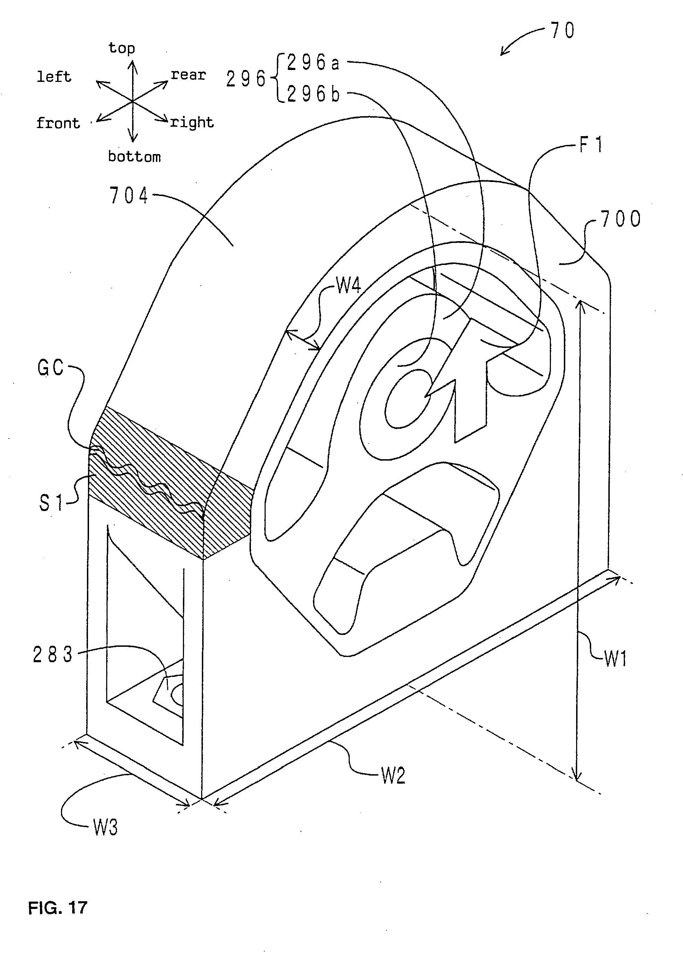

Fig. 17 is a perspective view of an engine mount molded using the wavy gate. Components corresponding to those in Fig. 8 are indicated with the same reference numerals. As shown in Fig. 17, the gate cut mark GC has a wavy shape extending in the left and right direction. In use of the engine mount 70, a stress tends to be collectively exerted on a stress concentrated portion S1, as hatched in Fig. 17. Meanwhile, the strength of the engine mount 70 tends to be decreased in the vicinity of the gate cut mark GC. It is thus preferred that the gate cut mark GC be provided so as to avoid the stress concentrated portion S1.

It may be unavoidable, however, to form the gate cut mark GC in the stress concentrated portion S1 depending on a mold structure of the engine mount 70. In this case, using the non-linear gate 25 as shown in Fig. 12 or 13 improves the strength in the gate cut mark GC in the vibration direction (vertical direction) in the vicinity thereof of the engine mount 70. Specifically, a decrease in the strength due to forming of the gate cut mark GC can be reduced by using the non-linear gate 25.

Furthermore, molding conditions of the resin molding method of the present embodiment are not particularly limited. For example, a cylinder temperature and a mold temperature of a molding machine may appropriately be set according to properties of the molten resin 91 to be used and specifications of the engine mount 70.

### (Embodiment 1)

Observation results of fracture cross sections of engine mounts are explained below. A sample of Embodiment 1 is the engine mount 70 of the first embodiment shown in Fig. 8. The sample of Embodiment 1 was produced in the resin molding method of the first embodiment. A sample of Comparative Example 1 is a conventional engine mount 100 shown in Fig. 22. The sample of Comparative Example 1 was produced in a resin molding method using a conventional one-point gate 102. Molding conditions in the both resin molding methods were identical except for a resin flow path. For example, a resin temperature was 300 °C. A mold temperature was 80 °C. An injection rate was 30 mm/s. A cooling time was 30 seconds. Dimensions and materials of the samples in Embodiment 1 and Comparative Example 1 were also identical.

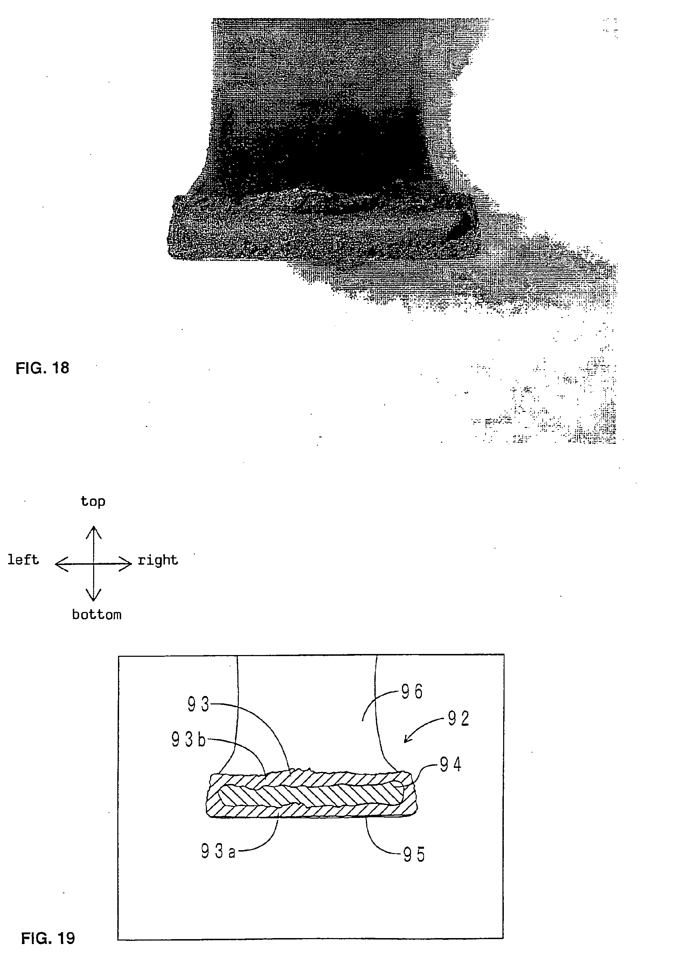

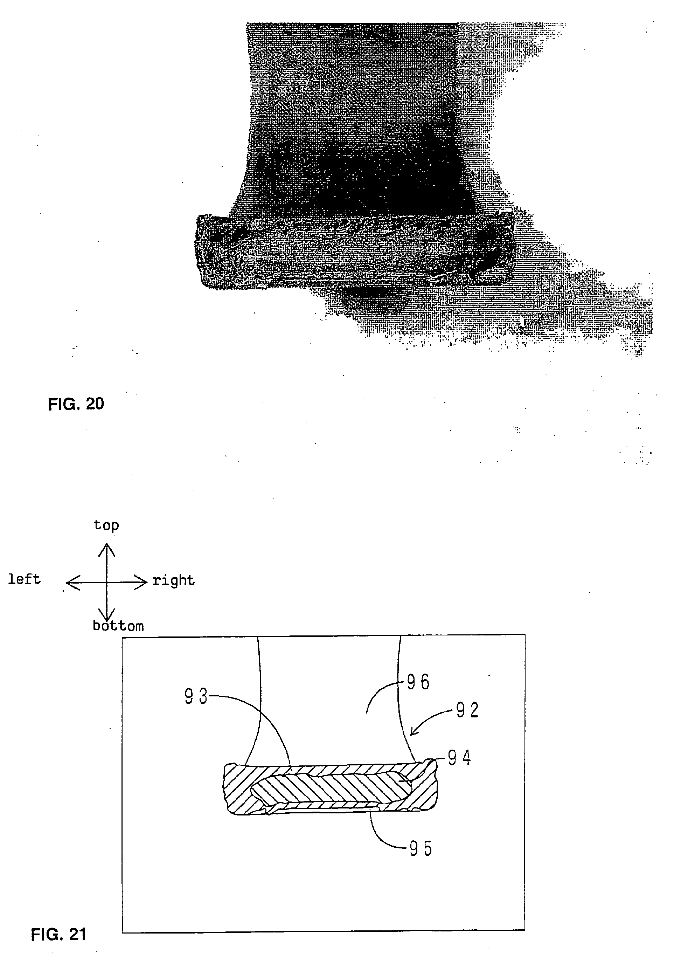

Fig. 18 is a photo of a fracture cross section of the sample of Embodiment 1. Fig. 19 is a drawing of the photo. Fig. 20 is a photo of a fracture cross section of the sample of Comparative Example 1. Fig. 21 is a drawing of the photo. In Figs. 18 to 21, a whitish central portion in a fracture cross section 92 was a non-oriented portion 94. In contrast, a fluffed portion (portion having rough unevenness) surrounding the non-oriented portion 94 was an oriented portion 93.

In comparison of the sample of Embodiment 1 (Figs. 18 and 19) and the sample of Comparative Example 1 (Figs. 20 and 21), the oriented portion 93 was formed more along an external edge of the fracture cross section 92 in the fracture cross section 92 of the sample of Embodiment 1 than in the fracture cross section 92 of the sample of Comparative Example 1. In other words, the oriented portion 93 of the sample of Embodiment 1 had a shape closer to a rectangular shape. Furthermore, the fracture cross section 92 of the sample of Embodiment 1 was thicker than the fracture cross section 92 of the sample of Comparative Example 1 in the oriented portion 93 in the vertical direction in the vicinity of vertical edges of the fracture cross section 92. In addition, the vertical thickness of the oriented portion 93 was less varied throughout the left and right length.

As shown in Figs. 18 and 19, an oriented portion 93a on the gate side was provided between a front surface 95 on the gate side and the non-oriented portion 94 of the fracture cross section 92 of the sample of Embodiment 1. Furthermore, an oriented portion 93b on the opposite side to the gate was provided between a front surface 96 on the opposite side to the gate and the non-oriented portion 94. The vertical thickness of the oriented portion 93b on the opposite side to the gate was greater than the vertical thickness of the oriented portion 93a on the gate side.

### (Embodiment 2)

A breaking strength test of the engine mount of the first embodiment is explained below. The same reference numerals as in Figs. 1 to 8 (first embodiment) are used for the components below.

### <Samples>

Dimensions of samples of Embodiment 2, Comparative Example 2, and Reference Example 2 were all identical. Specifically, the dimensions of the samples were identical to those of the engine mount 70 in Fig. 8. Reference Example 2 was not a publicly known technology. A resin to form the samples of Embodiment 2, Comparative Example 2, and Reference Example 2 was a mixture of a base material (nylon 66) and 50 mass % (with base material of 100 mass %) of a filler (glass fiber).

### <Resin Molding Method>

Molding conditions of each sample were identical except for a shape of the gate 25. The gate 25 of Embodiment 2 was same as in the first embodiment. The restricted portion 24 and the extended portion 26 were disposed upstream of the gate 25. The flow path cross section of the extended portion 26 had dimensions of 50 mm × 6 mm. The flow path cross section of the restricted portion 24 had dimensions of 50 mm × 2 mm. The flow path cross section of the gate 25 had dimensions of 50 mm × 4 mm.

A gate of Comparative Example 2 was a one-point gate 102 shown in Fig. 22. A restricted portion 24 and an extended portion 26 were not disposed upstream of the one-point gate 102. The one-point gate 102 had a diameter of 5 mm.

A gate of Reference Example 2 was a multi-gate provided by dividing the gate 25 of the first embodiment into 12 (long side was divided into 12). A restricted portion 24 and an extended portion 26 were disposed upstream of the multi-gate. The flow path cross section of the extended portion 26 had dimensions of 50 mm × 6 mm. The flow path cross section of the restricted portion 24 had dimensions of 50 mm × 2 mm. The flow path cross section of the multi-gate had dimensions of 50 mm × 4 mm.

### <Testing Method and Test Results>

The breaking strength test was conducted in the procedure below. The engine mount 70 was first fixed to a jig. A metal round bar was then inserted into the cylindrical portion 296b. The round bar was subsequently pulled upward in Fig. 8. The elevation rate of the round bar was 20 mm/min. A stress at which the engine mount 70 was broken was defmed as breaking strength. With the breaking strength of Comparative Example 2 of 100%, the breaking strength of both Embodiment 2 and Reference Example 2 was 113%. Compared with Comparative Example 2, the breaking strength was higher in Embodiment 2 and Reference Example 2.

### [Description of the Numerical Characters]

### 1: Mold

20: Fixed platen; 21: Movable platen; 22D: Slide core for a restricting member; 22U: Slide core for a restricting member; 24: Restricted portion; 25: Gate; 26: Extended portion; 70: Engine mount (resin molding); 90: Resin flow path; 91: Molten resin; 92: Fracture cross section; 93: Oriented portion; 93a: Oriented portion on a gate side; 93b: Oriented portion on an opposite side to a gate; 94: Non-oriented portion; 95: Front surface on a gate side; 96: Front surface on an opposite side to a gate
200: Sprue; 220D: Restricting member; 220U: Restricting member; 280F: Slide core for a concave portion; 280R: Slide core for a concave portion; 281: Slide core for fixing nuts; 282: Projection; 283: Nut; 290: Runner; 291: Concave portion for slide cores; 292: Cavity; 292a: Extending portion in an intersecting direction; 293F: Front concave portion; 293R: Rear concave portion; 294: Lower concave portion; 295L: Projection; 296: Elastic member; 296a: Main body; 296b: Cylindrical portion; 700: Bracket; 701: Fracture cross section; 702: Oriented portion; 702a: Oriented portion on a gate side; 702b: Oriented portion on an opposite side to a gate; 703: Non-oriented portion; 704: Front surface on a gate side; 705: Front surface on an opposite side to a gate; 800 to 802: Filler
F1: Load; GC: Gate cut mark; L1: Long side; W1: Vertical length; W2: Anteroposterior length; W3: left and right length; W4: Radial thickness; W5: Thickness; W6: Thickness

## Claims

1. A resin molding method comprising:
clamping a mold to form a resin flow path comprising an extended portion, a restricted portion, a linear gate, and a cavity,
the extended portion being disposed downstream of a nozzle of a molding machine to extend a flow path cross-sectional area,
the restricted portion being disposed downstream of the extended portion to restrict the flow path cross-sectional area,
the gate being disposed downstream of the restricted portion,
the cavity being disposed downstream of the gate and being provided with an extending portion in an intersecting direction that extends in the direction intersecting a connecting direction of the restricted portion and the gate;
injecting a molten resin from the nozzle into the resin flow path to pour the molten resin while splitting the molten resin from the gate to the extending portion in the intersecting direction, the molten resin comprising a base material and an anisotropic solid filler dispersed in the base material; and
opening the mold to remove a resin molding formed of the solidified molten resin.

2. The resin molding method according to claim 1, wherein the gate has a slit shape.

3. The resin molding method according to one of claims 1 and 2, wherein a short side of a flow path cross section in the extending portion in the intersecting direction has a length of 4 mm or greater.

4. The resin molding method according to one of claims 1 to 3, wherein a long side of the gate and a long side of the flow path cross section in the extending portion in the intersecting direction are substantially parallel in the substantially same length.

5. The resin molding method according to one of claims 1 to 4, wherein the connecting direction of the restricted portion and the gate and the extending direction of the extending portion in the intersecting direction are substantially orthogonal.

6. The resin molding method according to one of claims 1 to 5, wherein the extending direction of the flow path cross-sectional area in the extended portion and the restricting direction of the flow path cross-sectional area in the restricted portion are substantially orthogonal.

7. A resin molding comprising a fracture cross section provided with an oriented portion that has a high orientation of a filler and a non-oriented portion that has a lower orientation of the filler than in the oriented portion, wherein
a fracture direction of the fracture cross section intersects with an extending direction of a front surface on a gate side having a linear gate cut mark,
the oriented portion is disposed in a frame shape along a shape of an external edge of the fracture cross section, and
the non-oriented portion is disposed inside the oriented portion.

8. The resin molding according to claim 7, wherein the gate cut mark has a slit shape.

9. The resin molding according to one of claims 7 and 8, wherein
the oriented portion comprises an oriented portion on the gate side and an oriented portion on an opposite side to the gate having the non-oriented portion in between, the oriented portion on the gate side being proximate to the front surface on the gate side, the oriented portion on the opposite side to the gate being proximate to the front surface on the opposite side to the gate opposite to the front surface on the gate side, and
the oriented portion on the opposite side to the gate is thicker than the oriented portion on the gate side.

## Amended claims

### Amended claims under Art. 19.1 PCT

**1.** (Amended) A resin molding method comprising:
clamping a mold to form a resin flow path comprising an extended portion, a restricted portion, a linear gate, and a cavity,
the extended portion being disposed downstream of a nozzle of a molding machine to extend a flow path cross-sectional area,
the restricted portion being disposed downstream of the extended portion to restrict the flow path cross-sectional area,
the gate being disposed downstream of the restricted portion,
the cavity being disposed downstream of the gate and being provided with an extending portion in an intersecting direction that extends in the direction intersecting a connecting direction of the restricted portion and the gate;
injecting a molten resin from the nozzle into the resin flow path to pour the molten resin while causing the molten resin to impinge on a mold surface so as to be split from the gate to the extending portion in the intersecting direction, the molten resin comprising a base material and an anisotropic solid filler dispersed in the base material; and
opening the mold to remove a resin molding formed of the solidified molten resin.

**2.** The resin molding method according to claim 1, wherein the gate has a slit shape.

**3.** The resin molding method according to one of claims 1 and 2, wherein a short side of a flow path cross section in the extending portion in the intersecting direction has a length of 4 mm or greater.

**4.** The resin molding method according to one of claims 1 to 3, wherein a long side of the gate and a long side of the flow path cross section in the extending portion in the intersecting direction are substantially parallel in the substantially same length.

**5.** The resin molding method according to one of claims 1 to 4, wherein the connecting direction of the restricted portion and the gate and the extending direction of the extending portion in the intersecting direction are substantially orthogonal.

**6.** The resin molding method according to one of claims 1 to 5, wherein the extending direction of the flow path cross-sectional area in the extended portion and the restricting direction of the flow path cross-sectional area in the restricted portion are substantially orthogonal.

**7.** A resin molding comprising a fracture cross section provided with an oriented portion that has a high orientation of a filler and a non-oriented portion that has a lower orientation of the filler than in the oriented portion, wherein
a fracture direction of the fracture cross section intersects with an extending direction of a front surface on a gate side having a linear gate cut mark,
the oriented portion is disposed in a frame shape along a shape of an external edge of the fracture cross section, and
the non-oriented portion is disposed inside the oriented portion.

**8.** The resin molding according to claim 7, wherein the gate cut mark has a slit shape.

**9.** The resin molding according to one of claims 7 and 8, wherein
the oriented portion comprises an oriented portion on the gate side and an oriented portion on an opposite side to the gate having the non-oriented portion in between, the oriented portion on the gate side being proximate to the front surface on the gate side, the oriented portion on the opposite side to the gate being proximate to the front surface on the opposite side to the gate opposite to the front surface on the gate side, and
the oriented portion on the opposite side to the gate is thicker than the oriented portion on the gate side.

Statement under Art. 19.1 PCT
In claim 1, it is clarified that the molten resin impinges on the mold surface and the flow splits as the molten resin flows from the gate into the extending portion in the intersecting direction. The amendment is based on the description in the paragraph [0019] in the specification, stating that "Thus, the molten resin having passed through the gate impinges on a mold surface (including a surface of an insert member) demarcating the extending portion in the intersecting direction, and then flows into the cavity."

In Fig. 1(a) of Patent Literature 1, a gate 2 and a cavity 4 are linearly connected. Thus, a molten resin having passed through the gate 3 flows into the cavity 4 without impinging on a mold surface.

According to claim 1 of the present invention, the molten resin having passed through the gate once impinges on the mold surface, and then flows into the extending portion in the intersecting direction. Thus, the flow velocity distribution of the molten resin can be prevented from varying.
